# EUROPEAN PATENT APPLICATION

(11) **EP 4 730 242 A1**
(43) Date of publication of application: **22.04.2026**
(21) Application number: 25201469.1
(22) Date of filing: 10.09.2025
(51) Int. Cl.: G06Q 10/10, G06F 3/12, H04N 1/00

(54) **INFORMATION PROCESSING SYSTEM, INFORMATION PROCESSING DEVICE, AND INFORMATION PROCESSING METHOD**

(30) Priority: 18.10.2024 JP 2024184172
(71) Applicant: Toshiba TEC Kabushiki Kaisha, Tokyo 141-8562 (JP)
(72) Inventor: Aoyama, Ryuichi, Tokyo, 141-8562 (JP)
(74) Representative: Bandpay & Greuter

(57) **Abstract**

According to one embodiment, an information processing system includes a first storage unit that stores user information for each notification destination user and a creation unit that creates a workflow plan including a notification destination user to be used for notifications required in the workflow plan. The workflow plan is executable by a system user without requiring the user to provide user information. A second storage unit stores the workflow plan created by the creation unit. An execution unit is provided such that, when execution of the workflow plan stored in the second storage unit begins, user information of the notification destination user set in the workflow plan as the notification destination is acquired from the first storage unit and a notification to the notification destination user is sent in accordance with the acquired user information and the workflow plan.

## Description

### FIELD

Embodiments described herein relate generally to an information processing system, an information processing device, and an information processing method.

### BACKGROUND

Related art discloses a workflow system in which a workflow (workflow plan) is defined as a series of tasks related to certain types of work. The workflow can be standardized in accordance with the work and task content. For example, in one workflow system, a workflow plan includes scanning a paper document with an image forming device to create an electronic document, then distributing the electronic document to an email address, a file server, or the like as designated by a user. Other work or tasks based on the defined workflow plan may also be performed. In this workflow system, when a logged-in user scans the paper document with the image forming device, the user starts a selected workflow and then scans the paper document, and thus it is possible to automatically perform the tasks defined in the workflow.

In this manner, when a user starts to execute a workflow himself or herself, the user information associated with the user is known at the starting time of the workflow, and thus when an error occurs in the workflow, such as when a return occurs, or when additional user operations or inputs are required, a notification can be given or sent to the user.

However, when a user does not initiate the workflow start, but rather performs an operation outside a designated workflow, such as performing an optical character recognition (OCR) operation on a file, the workflow may start with a workflow execution start applied when the file is uploaded to file storage and thus the user does not cause the workflow to start. In such a case, the user information may not be known at the time of starting the workflow. Therefore, when a user notification is required while executing the workflow, the user cannot be identified and notified of the issue with the executing workflow.

### DISCLOSURE OF THE INVENTION

To this end, an information processing system, a workflow system and an information processing method and a non-transitory, computer-readable medium storing program instructions which causes the system to perform the method according to appended claims are provided.

### BRIEF DESCRIPTION OF THE DRAWINGS

FIG. 1 is a block diagram of a service providing system to which a workflow system according to a first embodiment is applied.
FIG. 2 is a block diagram of a service providing system.
FIG. 3 is a block diagram of a server device.
FIG. 4 is a schematic diagram showing an example of registered contents of a responsible person database.
FIG. 5 is a schematic diagram showing an example of stored contents of a responsible person setting storage unit of a server device.
FIG. 6 is a block diagram of a registered user terminal, which can also be a creator terminal in some contexts.
FIG. 7 is a sequence diagram showing operations when a workflow is created in an information processing system.
FIG. 8 is a diagram showing an example of a workflow registration screen.
FIG. 9 depicts an example of a workflow that can be created.
FIG. 10 is a flowchart of a workflow creation processing operation executed by a processor of a creator terminal.
FIG. 11 is a diagram showing a first part of a sequence of operations when executing a workflow in a service providing system associated with a first embodiment.
FIG. 12 is a diagram showing a second part of a sequence of operations when executing a workflow in the service providing system associated with a first embodiment.
FIG. 13 is a flowchart of a processing operation according to a workflow executed by a processor of a server device.
FIG. 14 is a block diagram of a server device according to a second embodiment.
FIG. 15 is a sequence diagram showing operations when a workflow is created in a second embodiment.
FIG. 16 is a flowchart showing an example of a workflow creation processing operation executed by a processor of a server device according to a second embodiment.

### DETAILED DESCRIPTION

Embodiments described herein provide an information processing system, an information processing device, and an information processing method that make it possible to specify a destination to be notified when a user notification is required during execution of a workflow even for a workflow for which user information was not assigned at the starting of the workflow.

In general, according to one embodiment, an information processing system includes a first storage unit that stores user information for each notification destination user; a creation unit that creates a workflow plan including a notification destination user in the first storage unit set as a notification destination to be used for notifications required in the workflow plan, the workflow plan being executable without requiring a user to provide user information; a second storage unit that stores the workflow plan created by the creation unit; and an execution unit that, when execution of the workflow plan stored in the second storage unit is started, acquires user information of the notification destination user set in the workflow plan as the notification destination from the first storage unit and sends a notification to the notification destination user in accordance with the acquired user information and the workflow plan.

### [First embodiment]

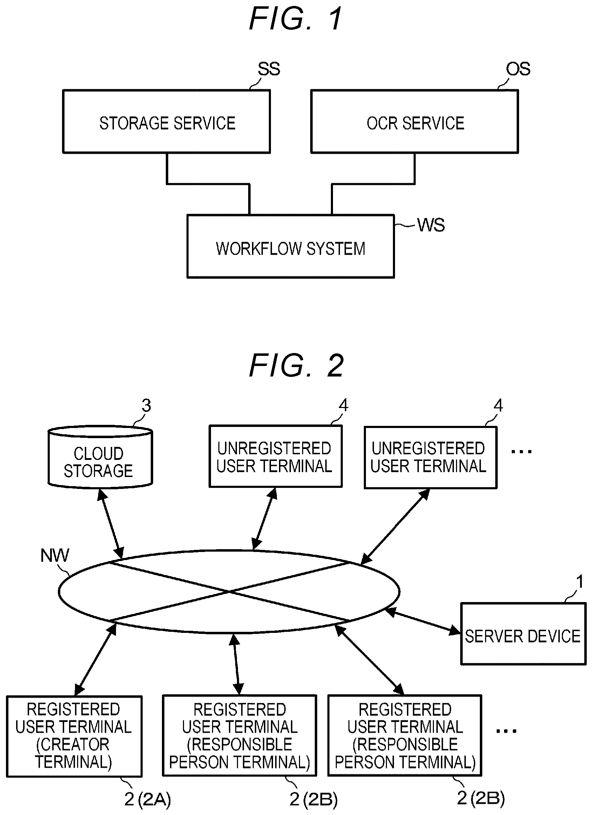

FIG. 1 is a block diagram showing an example of the overall configuration of a service providing system to which a workflow system WS according to a first embodiment is applied. In this first embodiment, a workflow system WS cooperates with a storage service SS and an OCR service OS. The storage service SS provides a service (function) of storing a file of any user in a cloud storage. The OCR service OS provides an OCR service (function) of performing optical character recognition (OCR) or the like on data in the file. In the following example, it is assumed that the workflow system WS acquires a file from the storage service SS, performs character recognition on the file by using the OCR service OS, and then causes a responsible person (who has been set in advance) to check the OCR result. After the responsible person check, the workflow system WS executes a workflow (e.g., a workflow plan incorporating a series of preset steps/processes/tasks or the like set in advance) on the file and any associated information to be stored in the storage service SS.

FIG. 2 is a block diagram showing an example of a specific configuration of a service providing system. The service providing system includes a server device 1, a plurality of registered user terminals 2, and a cloud storage 3, which are connected to each other via a network NW such as the Internet. The server device 1 can at least execute a workflow (preset workflow plan) in the workflow system WS. In this first embodiment, it is assumed that an OCR service OS is also provided by the server device 1. The registered user terminal 2 can be any terminal device that can be used by a registered user (a person registered in the server device 1 as a user of the workflow system WS). That is, the workflow system WS includes the server device 1 and the registered user terminal 2. The cloud storage 3 is a storage provided by a storage service SS. The cloud storage 3 is a storage destination for the user's files. In FIG. 2, the storage service SS that controls the cloud storage 3 is omitted from the depiction (but see FIG. 1). In addition, the service providing system may also include one or more unregistered user terminals 4, which are terminals used by unregistered users of the workflow system WS. In general, the unregistered users cannot use the workflow system WS, but may be a user of the storage service SS and can thus store a file in the cloud storage 3 via the network NW from an unregistered user terminal 4.

Among registered user terminals 2 there is at least one creator terminal 2A and at least one responsible person terminal 2B. The creator terminal 2A is a terminal that is used by a registered user who is designated as an administrator to create a workflow (workflow plan). The responsible person terminal 2B is a terminal used by a registered user (a responsible person) who is to be notified when a user notification is required during execution of a workflow. Both the creator terminal 2A and the responsible person terminal 2B can store a file in the cloud storage 3 via the network NW, in a manner similar to the unregistered user terminal 4.

The server device 1 may be an information processing apparatus such as a server computer or may be a multi-function peripheral (hereinafter abbreviated as MFP) that is placed in a workplace (e.g., office) and has, for example, at least a scanning function, a printing function, and a communication function. The registered user terminal 2 and the unregistered user terminal 4 may be an information processing apparatus such as a personal computer. In addition, the unregistered user terminal 4 may be an MFP placed in a workplace or the like.

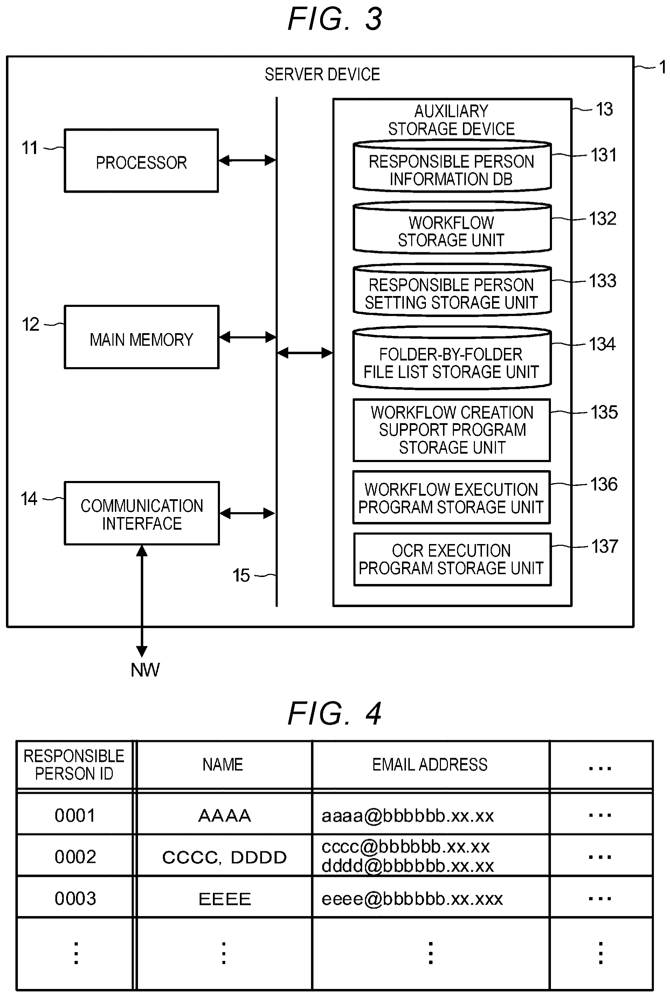

FIG. 3 is a block diagram showing an example of the configuration of the server device 1. As shown in FIG. 3, the server device 1 includes a processor 11, a main memory 12, an auxiliary storage device 13, a communication interface 14, and the like. These components are connected to each other via a bus line 15 such as a data bus.

The processor 11 is, for example, a central processing unit (CPU), but is not limited thereto. The processor 11 may be a multi-core/multi-threaded processor capable of executing a plurality of processes in parallel. The processor 11 may also be a micro processing unit (MPU). The processor 11 has a function of controlling the overall operation of the server device 1. The processor 11 may include an internal memory and various interfaces. The processor 11 implements various processes by executing programs stored in advance in the internal memory or the auxiliary storage device 13.

Some of the various functions that are implemented by executing a program by the processor 11 may be implemented by various types of hardware circuits, including integrated circuits such as an application specific integrated circuit (ASIC), a digital signal processor (DSP), a field-programmable gate array (FPGA), a graphics processing unit (GPU), a system on a chip (SoC), and a programmable logic device (PLD). In this case, the processor 11 controls the functions executed by the hardware circuits.

The main memory 12 is a volatile memory. The main memory 12 is a working memory or a buffer memory. The main memory 12 can store various application programs on the basis of commands received from the processor 11. The main memory 12 can also include a temporary storage unit that stores data necessary for the execution of control programs and application programs stored in the auxiliary storage device 13, and execution results of the programs.

The auxiliary storage device 13 is a non-volatile internal storage to which data can be written and rewritten. Inexpensive storage devices with low fault tolerance, such as a hard disk drive (HDD), a solid state drive (SSD), or a flash memory, are adopted for the auxiliary storage device 13. The auxiliary storage device 13 stores control programs, application programs, various data, and the like in accordance with the operational purpose of the server device 1. For example, the auxiliary storage device 13 has a responsible person database 131 (referred to as a responsible person information DB in FIG. 3), a workflow storage unit 132, a responsible person setting storage unit 133, a folder-by-folder file list storage unit 134, a workflow creation support program storage unit 135, a workflow execution program storage unit 136, and an OCR execution program storage unit 137.

The responsible person database 131 stores user information including notification destination information for each notification destination user set as a notification destination. FIG. 4 is a schematic diagram showing an example of registered contents of the responsible person database 131. As shown in FIG. 4, the responsible person database 131 stores user information including the name of a registered user, an email address (a notification destination), and other information in a record for each notification destination user in association with a unique responsible person ID. A user group including a plurality of registered users can be set as a notification destination under one responsible person ID.

The workflow storage unit 132 stores a workflow created in response to an instruction from a registered user (an administrator) by operating the creator terminal 2A.

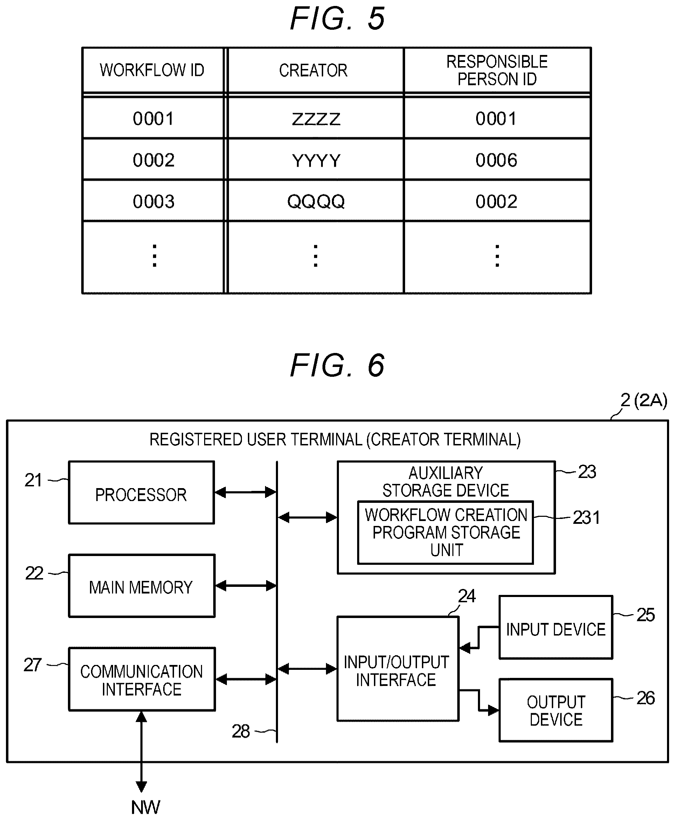

The responsible person setting storage unit 133 stores correspondence information indicating a correspondence between a workflow and a notification destination user. The correspondence is set in response to an instruction from a registered user operating the creator terminal 2A when creating a workflow. FIG. 5 is a schematic diagram showing an example of contents stored in the responsible person setting storage unit 133. As shown in FIG. 5, the responsible person setting storage unit 133 stores a creator name and a responsible person ID as correspondence information, in association with a workflow ID that uniquely indicates a workflow to be created. The creator name may not be necessary.

The folder-by-folder file list storage unit 134 stores a file list for each folder in the cloud storage 3. The file list is a list of file names of files stored in the folder, and can also include a timestamp for each file. Each file list stored in the folder-by-folder file list storage unit 134 can be updated in accordance with detection that a new file is stored in the corresponding folder in the cloud storage 3. The new file includes an updated file in addition to a newly stored file.

The workflow creation support program storage unit 135 stores a workflow creation support program that causes the processor 11 to perform processing operations to support the creation of a workflow by a registered user who becomes an administrator through the operation of the creator terminal 2A.

The workflow execution program storage unit 136 stores a workflow execution program that causes the processor 11 to execute a workflow stored in the workflow storage unit 132.

The OCR execution program storage unit 137 stores an OCR execution program that causes the processor 11 to perform OCR on data in a file.

The communication interface 14 is an interface for communicating with the registered user terminal 2 and the cloud storage 3, which are external devices on the network NW.

The server device 1 may have components or aspect in addition to the configuration shown in FIG. 3. For example, the server device 1 may include a reader device for reading information from a recording medium that stores various information such as programs and data. The programs stored in the recording medium may include at least one of a workflow creation support program, a workflow execution program, and an OCR execution program.

FIG. 6 is a block diagram showing an example of the configuration of a registered user terminal 2, which also corresponds to a creator terminal 2A. As shown in FIG. 6, the registered user terminal 2 (creator terminal 2A) includes a processor 21, a main memory 22, an auxiliary storage device 23, an input/output interface 24, an input device 25, an output device 26, and a communication interface 27. The processor 21, the main memory 22, the auxiliary storage device 23, the input/output interface 24, and the communication interface 27 are connected to each other via a bus line 28 such as a data bus. The input device 25 and the output device 26 are connected to the input/output interface 24. In addition to the configuration shown in FIG. 6, the registered user terminal 2 (creator terminal 2A) may have additional components or aspect. Similarly, a registered user terminal 2 (creator terminal 2A) may lack certain components or aspects depicted in the configuration shown in FIG. 6.

The processor 21 is, for example, a CPU, but is not limited thereto. The processor 21 may be a multi-core/multi-thread processor and can execute a plurality of processes in parallel. The processor 21 may also be an MPU. The processor 21 has a function of controlling the overall operation of the registered user terminal 2. The processor 21 may be equipped with an internal memory and various interfaces. The processor 21 implements various processes by executing a program stored in advance in the internal memory or the auxiliary storage device 23. Some of the various functions implemented by the processor 21 executing a program may be implemented by various types of hardware circuits including integrated circuits such as ASIC, DSP, FPGA, GPU, SoC, and PLD. In this case, the processor 21 controls the functions executed by the hardware circuits.

The main memory 22 is a volatile memory. The main memory 22 is a working memory. The main memory 22 can store various application programs on the basis of instructions given from the processor 21. The main memory 22 can also store data necessary for executing the control programs and application programs stored in the auxiliary storage device 23, as well as the results of executing these programs.

The auxiliary storage device 23 is a non-volatile internal storage device that can write and rewrite data. The auxiliary storage device 23 stores control programs, application programs, and various data in accordance with the operational use of the registered user terminal 2. For example, the auxiliary storage device 23 includes a workflow creation program storage unit 231 that stores a workflow creation program as one of the application programs.

The input/output interface 24 is an interface for the input device 25 and the output device 26. The input device 25 is used by a creator to input instructions and information. The input device 25 may be, for example, a keyboard, a pointing device, such as a mouse or a touchpad, and the like. The input device 25 can also include a touch panel, operation buttons, and the like arranged on a display screen of the output device 26. The input device 25 can also include a reader device for reading information from a recording medium that stores various information such as programs and data. The programs stored in the recording medium may include a workflow creation program. The output device 26 includes a display, such as a liquid crystal monitor, an organic EL (Electro Luminescence) monitor, a projector screen, or a head-mounted display that displays various information generated by the registered user terminal 2. The output device 26 may also include a speaker that provides various information to the registered user as sound. Furthermore, the output device 26 may include a writer device for writing information generated by the registered user terminal 2 to a recording medium.

The communication interface 27 is an interface for communicating with the server device 1 or another external device on the network NW.

The registered user terminal 2 functioning as the responsible person terminal 2B has the same basic configuration as that of the registered user terminal 2 functioning as the creator terminal 2A, excepting that the auxiliary storage device 23 does not need to include the workflow creation program storage unit 231. Naturally, the registered user terminal 2 which is functioning as a responsible person terminal 2B may also include the workflow creation program storage unit 231, and generally any registered user terminal 2 can serve as the creator terminal 2A by executing a workflow creation program stored in a workflow creation program storage unit 231 or the like. In this manner, the information processing system according to the first embodiment may be configured such that any registered user can become a creator of a workflow using any registered user terminal 2.

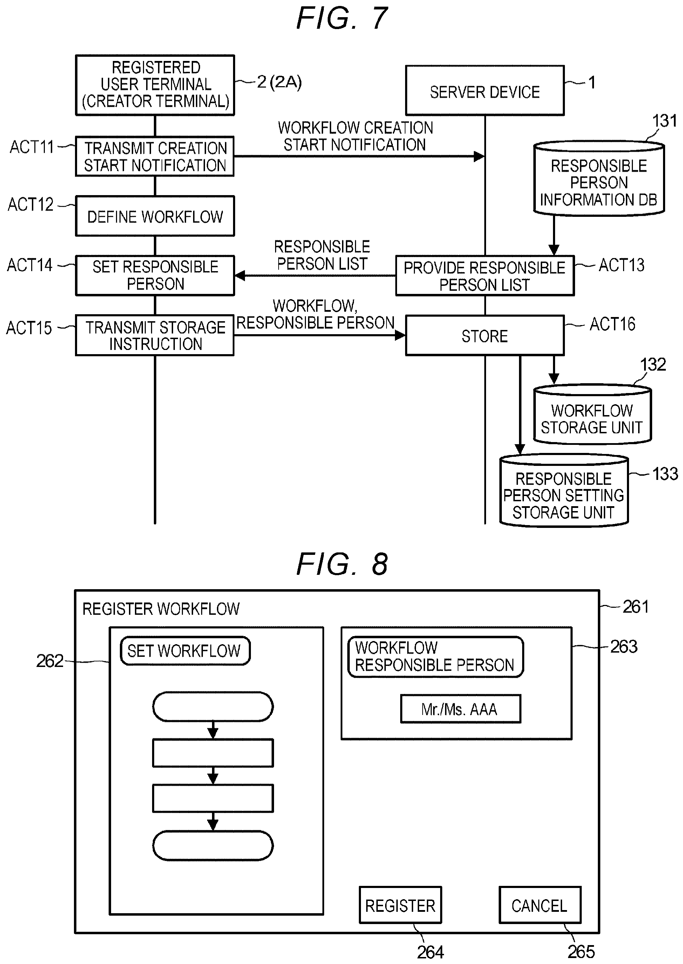

Hereinafter, operations when a workflow is created in the workflow system WS. FIG. 7 is a sequence diagram showing operations when a workflow is created using a creator terminal 2A of the workflow system WS according to the first embodiment.

When the registered user who is the creator instructs the creator terminal 2A to execute the workflow creation program stored in the workflow creation program storage unit 231 from the input device 25 of the creator terminal 2A, the registered user terminal 2 transmits a workflow creation start notification to the server device 1 (ACT11).

Then, the creator terminal 2A defines a workflow (workflow plan) in response to the instructions of the registered user who is acting as a creator (ACT12). That is, the creator terminal 2A displays a workflow registration screen on the output device 26, and sequentially stores the setting contents of the workflow plan as instructed by the creator through operations of the input device 25 or the like. The setting content as provided is reflected on the workflow registration screen.

FIG. 8 is a diagram showing an example of a workflow registration screen 261 displayed on the display of the output device 26 when a workflow is being created. The workflow registration screen 261 includes a workflow setting area 262, a workflow responsible person area 263, a registration button 264, and a cancel button 265. The workflow setting area 262 is an area for setting a workflow. The workflow responsible person area 263 is an area for setting a workflow responsible person to be notified during execution of the workflow. In the workflow responsible person area 263, the workflow responsible person can be selected from a list of responsible persons provided by the server device 1. The registration button 264 is for instructing registration (finalization and storage) of the set workflow along with information indicating the workflow responsible person in the server device 1. The cancel button 265 is for instructing cancellation of the setting of the workflow and workflow responsible person.

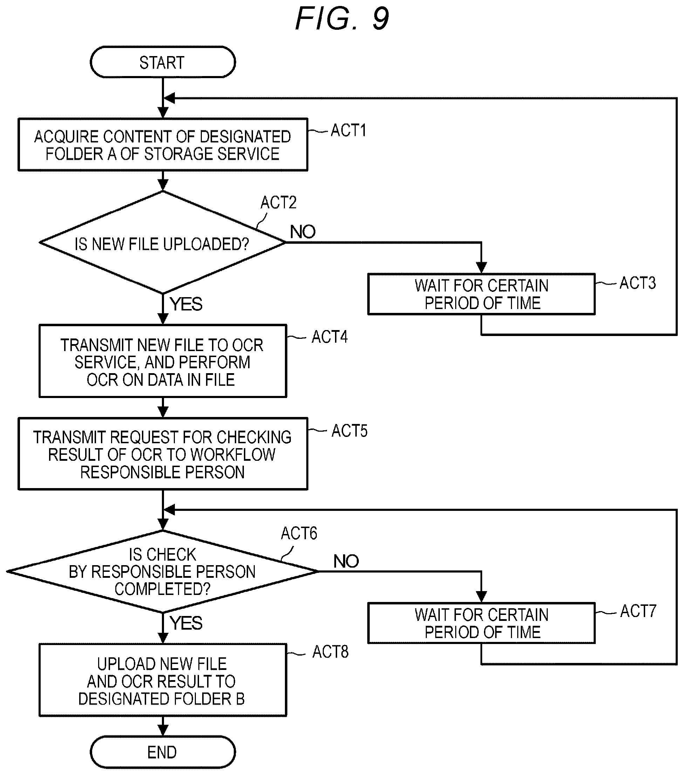

FIG. 9 is a diagram showing an example of a workflow (workflow plan) that can be created in the workflow system WS. The workflow in this example of FIG. 9 is a preset process to acquire a newly stored file from the storage service SS, perform character recognition on the new file using the OCR service OS, have the OCR result checked by a previously designated or set responsible person, and then store the checked OCR result in the storage service SS in association with the new file. Specifically, the workflow in this example is as follows:
The content of a designated folder A of the storage service SS is acquired (ACT1).

It is checked whether a new file has been uploaded to the folder A (ACT2).

When a new file has not been uploaded (ACT2: NO), the process waits for a certain period of time (ACT3). Then, the process is repeated from ACT1.

When a new file has been uploaded (ACT2: YES), this new file is transmitted to an OCR service and data in the file is subjected to OCR (ACT4).

A request to check the result of the OCR is transmitted to a workflow responsible person (ACT5).

It process confirms whether the check by the workflow responsible person has been completed (ACT6).

When the check by the workflow responsible person has not been completed (ACT6: NO), the process waits for a certain period of time (ACT7). Then, the process is repeated from ACT6.

When the check by the responsible person has been completed (ACT6: YES), the newly uploaded document file and the (checked) result of the OCR on the document file are uploaded to a designated folder B of the storage service SS (ACT8).

When the request to check the result of the OCR is transmitted in ACT5, it is first necessary to identify the workflow responsible person to whom the request is to be transmitted.

Returning to the description of FIG. 7, when the server device 1 receives the workflow creation start notification transmitted from the creator terminal 2A, a list of workflow responsible persons stored in the responsible person database 131 is provided to the creator terminal 2A (ACT13).

The creator terminal 2A displays the list of responsible persons in the workflow responsible person area 263 of the workflow registration screen 261. The workflow responsible person to whom the workflow being created is to use (that is, to whom the OCR result is to be transmitted in ACT5) is set by permitting or requiring the workflow creator to select at least one person from the list of responsible persons (ACT14).

Then, once the creator operates the registration button 264 on the workflow registration screen 261, the creator terminal 2A transmits an instruction for storing the now defined workflow (with a preset workflow responsible person) to the server device 1 (ACT15).

The server device 1 receives the storage instruction to store the defined workflow in the workflow storage unit 132 and the associated preset workflow administrator (person responsible for the OCR check or the like) in the responsible person setting storage unit 133 (ACT16).

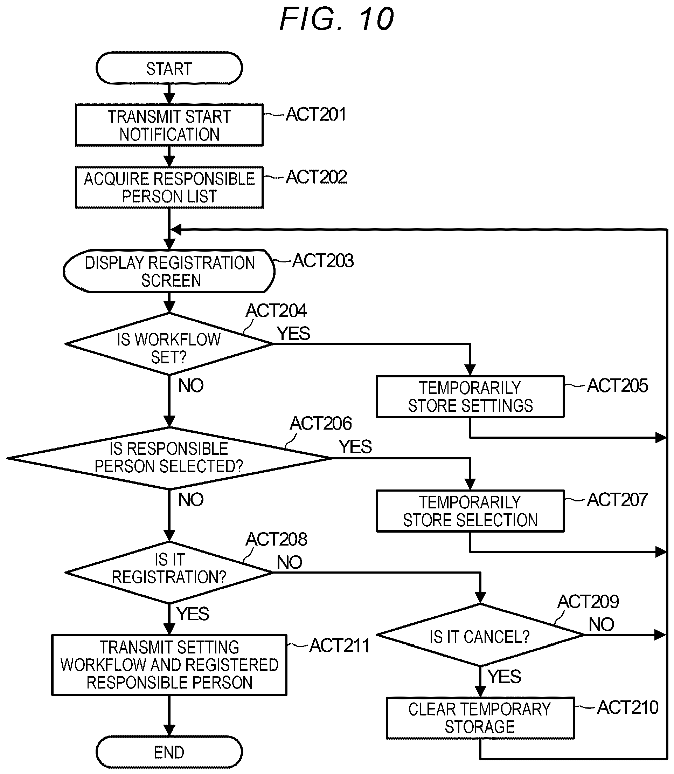

Hereinafter, operations of a registered user terminal 2 functioning as a creator terminal 2A for creating a workflow will be described. FIG. 10 is a flowchart showing an example of a workflow creation processing operation executed by the processor 21 of the registered user terminal 2 (creator terminal 2A). The processor 21 can execute this workflow creation processing operation by executing a workflow creation program (an information processing program according to the first embodiment) stored in the workflow creation program storage unit 231 of the auxiliary storage device 23. Unless otherwise specified, the processing operations of the processor 21 shown in the flowchart of FIG. 10 transitions from ACTn (n is a natural number.) to ACT(n+1). The same applies to flowcharts of other drawings to be described below.

In ACT201, the processor 21 transmits a workflow creation start notification to the server device 1 via the network NW through the communication interface 27.

In ACT202, the processor 21 acquires a list of responsible persons as transmitted from the server device 1 via the network NW through the communication interface 27, and temporarily stores the list of responsible persons in the main memory 22.

In ACT203, the processor 21 applies the list of responsible persons acquired from the server device 1 to screen data of a preset workflow creation screen and thus displays the list of responsible persons as part of the workflow registration screen 261 on the output device 26 via the input/output interface 24.

In ACT204, the processor 21 determines whether an input from the input device 25 (given via the input/output interface 24) is related to the setting of a workflow. When the input from the input device 25 is not related to the setting of the workflow, the processor 21 determines NO in ACT204 and proceeds to the process of ACT206. When the input from the input device 25 is related to the setting of the workflow, the processor 21 determines YES in ACT204 and proceeds to the process of ACT205.

In ACT205, the processor 21 temporarily stores the setting content of the workflow in the main memory 22 as input from the input device 25. Thereafter, the processor 21 returns to the process of ACT203 and displays the workflow registration screen 261 reflecting the just input setting content of the workflow.

In ACT206, the processor 21 determines whether the input from the input device 25 is related to the selection of the workflow responsible person. When the input from the input device 25 is not related to the selection of the workflow responsible person, the processor 21 determines NO in ACT206 and proceeds to the process of ACT208. When the input from the input device 25 is related to the selection of the workflow responsible person, the processor 21 determines YES in ACT206 and proceeds to the process of ACT207.

In ACT207, the processor 21 temporarily stores the selection result of the workflow responsible person input from the input device 25 in the main memory 22 as correspondence information indicating a correspondence between the workflow and the notification destination user. Thereafter, the processor 21 returns to the process of ACT203, and displays the workflow registration screen 261 reflecting the input selection result of the workflow responsible person.

In ACT208, the processor 21 determines whether the input from the input device 25 is a registration instruction provided by operating the registration button 264. When the input from the input device 25 is a registration instruction, the processor 21 determines YES in ACT208 and proceeds to the process of ACT210. When the input from the input device 25 is not a registration instruction, the processor 21 determines NO in ACT208 and proceeds to the process of ACT209.

In ACT209, the processor 21 determines whether the input from the input device 25 is a cancellation instruction provided by operating the cancel button 265. If the input from the input device 25 is not a cancellation instruction, the processor 21 determines NO in ACT209 and returns to the process of ACT203. When the input from the input device 25 is a cancellation instruction, the processor 21 determines YES in ACT209 and proceeds to the process of ACT210.

In ACT210, the processor 21 clears the setting content of the workflow and/or the selection result of the workflow responsible person temporarily stored in the main memory 22. Thereafter, the processor 21 returns to the process of ACT203 and displays the workflow registration screen 261 in its initial state.

In ACT211, the processor 21 transmits a storage instruction to the server device 1 via the communication interface 27 and the network NW, the storage instruction includes the setting content of the workflow temporarily stored in the main memory 22 and the selection result of the workflow responsible person, that is, correspondence information indicating a correspondence between the workflow and the notification destination user, if any. Then, the processor 21 ends the workflow creation processing operation shown in this flowchart.

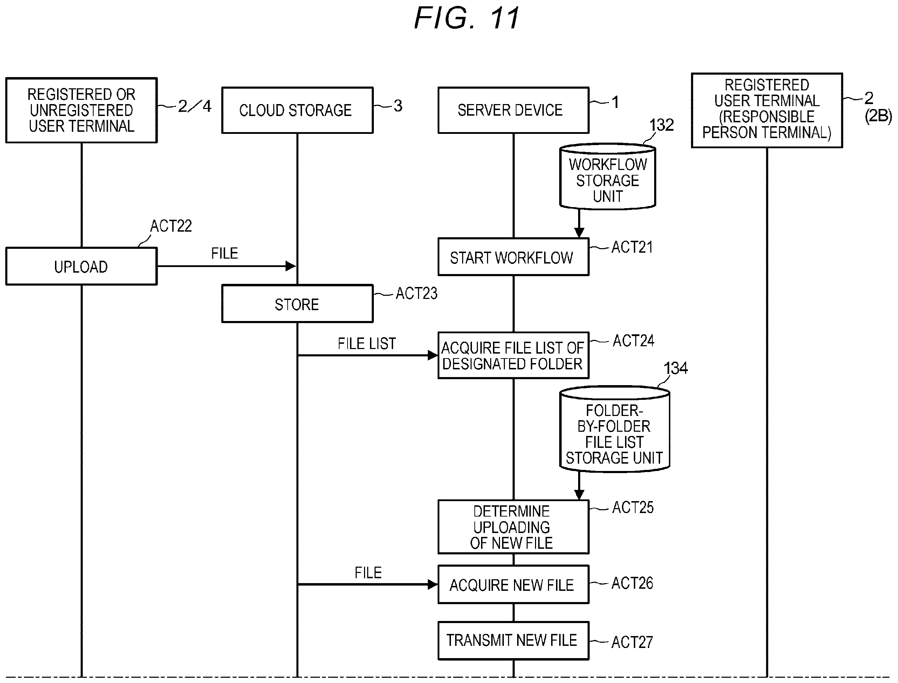

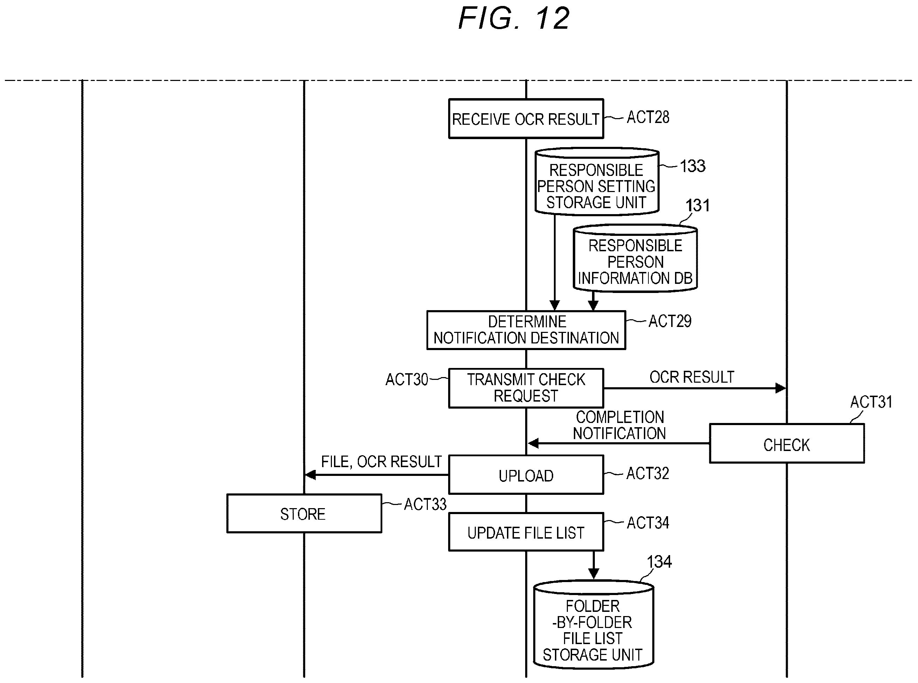

Next, operations when executing a workflow in the information processing system will be described. FIGS. 11 and 12 are a series of sequence diagrams showing operations when creating a workflow in the example of FIG. 9 in the service providing system to which the workflow system WS according to the first embodiment is applied.

The server device 1 executes the workflow execution program stored in the workflow execution program storage unit 136. Then, when the workflow (as shown in FIG. 9) is stored in the workflow storage unit 132 or when the execution of the workflow is instructed from a registered user terminal 2 after the workflow has been stored, the execution of the workflow is started (ACT21).

The registered user terminal 2 or the unregistered user terminal 4 can upload a file at any time by designating a storage destination folder of the cloud storage 3 (ACT22).

The cloud storage 3 stores the uploaded file in the designated folder (ACT23).

The server device 1 starts the workflow then accesses the cloud storage 3 at regular time intervals to acquire a file list of files stored in the designated folder (folder A in the example of FIG. 9) (ACT24).

Then, the server device 1 compares the acquired file list with a folder list for the folder A which is the corresponding folder stored in the folder-by-folder file list storage unit 134 to determine whether a new file was uploaded (ACT25).

When a new file has been uploaded, the server device 1 acquires this new file from the cloud storage 3 (ACT26).

Then, the server device 1 transmits the acquired new file to the OCR service OS (ACT27) and receives an OCR result from the OCR service OS (ACT28). The server device 1 may be able to provide the OCR service OS itself by executing the OCR execution program stored in the OCR execution program storage unit 137. In this case, the server device 1 passes the new file to the OCR execution program being executed on the server device 1 itself, performs the OCR, and acquires the OCR result.

Once the OCR result is obtained, the server device 1 identifies a notification destination email address (as a notification destination for the workflow) from email addresses stored in the responsible person database 131 in accordance with correspondence information indicating a correspondence between the workflow and the notification destination user stored in the responsible person setting storage unit 133 (ACT29).

Then, the server device 1 then transmits a check request for the OCR result to the identified notification destination email address (ACT30). The check request includes the OCR result so that a user may check for errors or the like.

When the workflow responsible person (a notification destination) receives the check request at the registered user terminal 2 function as the responsible person's responsible person terminal 2B, the workflow responsible person checks the OCR result, makes corrections if necessary, and returns a completion notification to the server device 1 (ACT31). When no corrections are made, the completion notification can be a simple approval notification, and when the OCR result is corrected, the completion notification can be an approval notification incorporating the corrected OCR result.

When the server device 1 receives the completion notification, the server device 1 uploads the new file and the OCR result by designating a storage destination folder of the cloud storage 3, for example, a folder B as in the example of FIG. 9 (ACT32).

The cloud storage 3 stores the uploaded file and OCR result in the folder B (a designated folder) (ACT33).

The server device 1 also updates the folder list for the folder A, which is the corresponding folder in the folder-by-folder file list storage unit 134, to the acquired file list (ACT34).

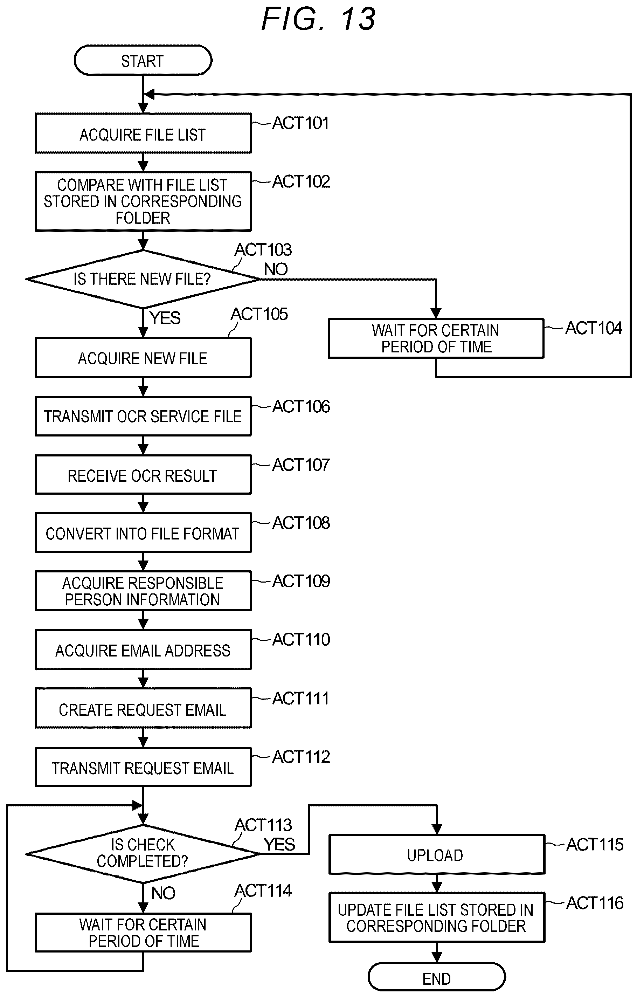

Hereinafter, operations for implementing operations during the creating of a workflow will be described. FIG. 13 is a flowchart showing an example of a processing operation according to the workflow in the example of FIG. 9. The processing operation is executed by the processor 11 of the server device 1. The processor 11 can perform a processing operation according to the workflow stored in the workflow storage unit 132 by executing the workflow execution program stored in the workflow execution program storage unit 136 of the auxiliary storage device 23.

In ACT101, the processor 11 acquires a file list from the folder A (a designated folder) of the cloud storage 3 designated in the workflow via the network NW using the communication interface 14.

In ACT102, the processor 11 compares the file list acquired from the cloud storage 3 with the stored file list stored in the folder A, which is the corresponding folder in the folder-by-folder file list storage unit 134.

In ACT103, the processor 11 determines whether there is a new file in the folder A on the basis of the comparison result. When the acquired file list includes a file that is not included in the stored file list, the processor 11 determines that the file not included in the stored file list is a new file. In addition, when a timestamp of a file included in the acquired file list is newer than any file included in the stored file list, the processor 11 determines the file to be a new file. When there is a new file, the processor 11 determines YES in ACT103 and proceeds to the process of ACT105. When there is no new file, the processor 11 determines NO in ACT103 and proceeds to the process of ACT104.

In ACT104, the processor 11 waits for a certain period of time. Thereafter, the processor 11 transitions to the process of ACT101.

In ACT105, the processor 11 acquires the file determined to be a new file from the folder A via the network NW through the communication interface 14. The processor 11 temporarily stores the acquired file in the main memory 12 or the auxiliary storage device 13.

In ACT 106, the processor 11 transmits the acquired file to the OCR service. For example, the processor 11 passes the acquired file to an OCR execution program that is being executed separately.

In ACT107, the processor 11 receives the OCR result.

In ACT108, the processor 11 converts the OCR result into a file format designated in the workflow. The processor 11 temporarily stores the OCR result with the converted file format in the main memory 12 or the auxiliary storage device 13.

In ACT109, the processor 11 acquires a responsible person ID (the responsible person information) corresponding to the workflow ID of the workflow from the correspondence information indicating a correspondence between the workflow and the notification destination user stored in the responsible person setting storage unit 133.

In ACT110, the processor 11 acquires a notification destination email address, which is a notification destination in the workflow, from among email addresses stored in the responsible person database 131 in association with the acquired responsible person ID.

In ACT111, the processor 11 creates an e-mail for a check request and attaches the temporarily stored OCR result with the converted file format.

In ACT112, the processor 11 transmits the created e-mail with attached or included OCR result via the communication interface 14.

In ACT 113, the processor 11 determines whether a check completion notification has been received from the workflow responsible person via the communication interface 14. When a check completion notification is received, the processor 11 determines YES in ACT113 and proceeds to the process of ACT115, which will be described below. When a check completion notification is not received, the processor 11 determines NO in ACT113 and proceeds to the process of ACT114.

In ACT114, the processor 11 waits for a certain period of time. Thereafter, the processor 11 proceeds to the process of ACT113.

In ACT115, the processor 11 uploads the temporarily stored new file and the temporarily stored OCR result or the corrected OCR result included in the completion notification to the folder B designated in the workflow via the network NW through the communication interface 14.

In ACT 116, the processor 11 updates the stored file list in the folder-by-folder file list storage unit 134 to correspond to the temporarily stored file list acquired from the cloud storage 3. Then, the processor 21 ends the processing operation according to the workflow. At this time, it is typically desirable to delete the data temporarily stored in the main memory 12 and/or the auxiliary storage device 13.

Although not specifically shown, processing operations such as those when a check completion is not received from a workflow administrator after a specified time elapses or when the check result is a denial rather than approval is received from the workflow administrator, can also be defined for the workflow, and the processor 11 can execute such processing according to the workflow definition.

As described above, the information processing system according to the first embodiment includes the responsible person database 131 in the server device 1. The responsible person database 131 is an example of a first storage unit that stores user information including notification destination information for each notification destination user who can be a notification destination. The processor 21 of the registered user terminal 2, which can be the creator terminal 2A, is an example of a creation unit that creates a workflow by setting a notification destination user stored in the responsible person database 131 as a notification destination to be used when a notification to a user is required in a workflow when user information is not assigned at the starting of the workflow. The workflow storage unit 132 of the server device 1 is an example of a second storage unit that stores a workflow created by the processor 21. The processor 11 of the server device 1 is an example of an execution unit that, when a workflow stored in the workflow storage unit 132 is started and a notification to a user is required, acquires, from the responsible person information database 131, user information for the notification destination user set when the workflow was created and notifies the notification destination user in accordance with the notification destination information included in the acquired user information.

In addition, the registered user terminal 2, which can be the creator terminal 2A, is an example of an information processing device according to the first embodiment. The registered user terminal 2 includes an input device 25 that accepts the operations of the creator of a workflow. The registered user terminal 2 also includes the processor 21. The processor 21, in accordance with the creator's operation input via the input device 25, sets a notification destination user to be used when a notification to a user is required in a workflow. The notification destination user (notification destination) is selected from among notification destination users stored in advance, and creates a workflow for which user information is not assigned at the starting of the workflow. The processor 21 then performs control for transmitting the created workflow and the set notification destination information to the server device 1, thereby storing the created workflow and the set notification destination information in the workflow storage unit 132 and the responsible person setting storage unit 133 of the auxiliary storage device 13 of the server device 1. Thus, the processor 21 is an example of a creation unit and a storage control unit.

In this manner, in the first embodiment, by setting a notification destination user to be a notification destination for a workflow that is not executed due to a user when the workflow is set, it is possible to easily specify a notification destination user to be notified when a user notification is required at the time of performing a workflow that cannot be specified by the user. For example, when an unregistered user "BBBB" uploads a document file to a designated folder of the cloud storage 3 by executing the storage service SS or another service from an unregistered user terminal 4, the workflow system WS cannot identify who started the workflow, and thus the workflow system WS cannot give a notification even when a user notification is required. On the other hand, in the first embodiment, the workflow system WS processes the workflow as being started by a notification destination user that was set at the time of creating the workflow. For example, a registered user "AAAA" was the notification destination set at the creation of the workflow. As such, the workflow system WS can notify the (preset) notification destination user as necessary. In this manner, according to the first embodiment, even when a workflow is not assigned user information at the time of starting, it is possible to specify a destination to be notified when a user notification is required during execution. Thereby, it is possible to give a notification to someone (the notification destination user specified at workflow creation) and prompt the someone (the preset user) to perform the necessary operation(s) during the workflow. In addition, according to the first embodiment, by setting the notification destination user at the time of setting (creating) the workflow, it is also possible to limit the users who are permitted to confirm the execution status of the workflow or provide the necessary operations or inputs.

The information processing system according to the first embodiment further includes the responsible person setting storage unit 133 of the server device 1 as an example of a third storage unit that stores correspondence information indicating a correspondence between a workflow and a notification destination user. The processor 21 of the creator terminal 2A creates the correspondence information when creating the workflow and stores the correspondence information in the responsible person setting storage unit 133. After the workflow is started and a notification to the user is required as part of the workflow, the processor 11 of the server device 1 determines the notification destination user corresponding to the workflow on the basis of the correspondence information stored in the responsible person setting storage unit 133 and acquires user information of the determined notification destination user from the responsible person database 131.

Thus, according to the first embodiment, it is possible to set and store a notification destination user for each workflow, and the processor 11 can easily specify the corresponding notification destination user in accordance with the workflow for which a notification is required.

Here, each notification destination user includes either a single user or a user group including a plurality of users.

In this manner, according to the first embodiment, not only a single registered user such as "AAAA" can be set as the notification destination user, but also a plurality of registered users such as "CCCC" and "DDDD", and when a user notification is required at the time of execution, it is possible to give a notification to a plurality of users.

### [Second embodiment]

In the first embodiment, an example is described in which a registered user terminal 2 functions as an information processing device, but the server device 1 may function as an information processing device. This will be described below as a second embodiment. The same configurations and operations as those in the first embodiment are denoted by the same reference symbols as those in the first embodiment, and additional description thereof may be omitted.

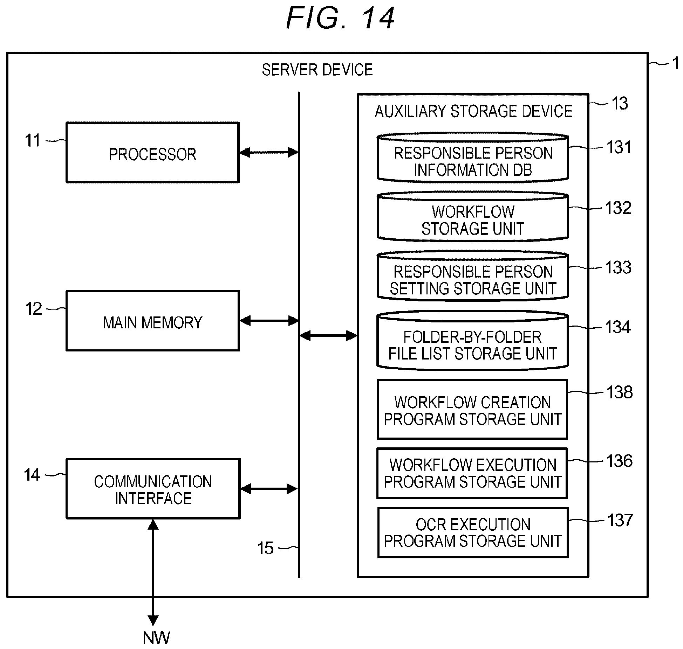

FIG. 14 is a block diagram showing an example of the configuration of the server device 1 according to the second embodiment in an information processing system according to the second embodiment. As shown in FIG. 14, the server device 1 of this second embodiment includes a workflow creation program storage unit 138 in the auxiliary storage device 13 instead of the workflow creation support program storage unit 135 as in the first embodiment. The workflow creation program storage unit 138 starts execution in response to a workflow creation request from the registered user terminal 2 ( creator terminal 2A) and stores a workflow creation program for creating a workflow using the registered user terminal 2 to accept inputs from the registered user who is functioning as the creator of a workflow. Thus, in the second embodiment, the registered user terminal 2, which functions as the creator terminal 2A, does not include therein the workflow creation program storage unit 231 as in the first embodiment.

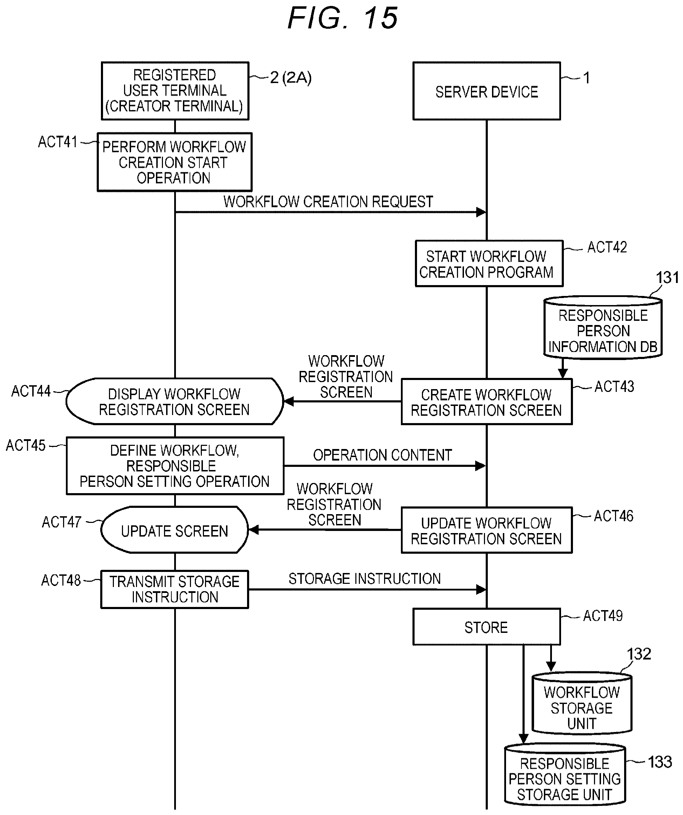

Hereinafter, operations when a workflow is created in the workflow system WS with such a configuration will be described. FIG. 15 is a sequence diagram showing operations of the server device 1 and the registered user terminal 2, which is a creator terminal 2A, of the workflow system WS according to the second embodiment when creating a workflow.

A registered user who is a creator at a registered user terminal 2 (as a creator terminal 2A), performs a predetermined workflow creation start operation using the input device 25 (ACT41). Thereby, a workflow creation request is transmitted from the creator terminal 2A to the server device 1.

In response to receiving the workflow creation request, the server device 1 executes the workflow creation program stored in the workflow creation program storage unit 138 and starts a workflow creation process (ACT42).

The server device 1 creates a workflow registration screen including a responsible person list on the basis of information about the workflow responsible person(s) stored in the responsible person database 131, and transmits the created workflow registration screen to the creator terminal 2A (ACT43).

The creator terminal 2A receives the workflow registration screen and displays the workflow registration screen as the workflow registration screen 261 on the display which is the output device 26 (ACT44).

The creator terminal 2A then accepts the creator's operation of defining a workflow and/or setting a workflow responsible person by the input device 25, and transmits an operation content to the server device 1 (ACT45).

The server device 1 receives the operation content, temporarily stores the content of the definition of a workflow and/or the setting of a workflow responsible person according to the operation content, and updates the workflow registration screen in accordance with the content of the settings (ACT46). Then, the server device 1 transmits the updated workflow registration screen to the creator terminal 2A.

The creator terminal 2A receives the updated workflow registration screen and updates the workflow registration screen 261 displayed on the display, which is the output device 26 (ACT47). Such ACTs 45 to 47 are repeated.

When the creator operates the registration button 264 on the workflow registration screen 261, the creator terminal 2A transmits a workflow storage instruction to the server device 1 (ACT48).

The server device 1 receives the storage instruction and stores the defined workflow, which is temporarily stored, in the workflow storage unit 132, and stores the set workflow administrator in the responsible person setting storage unit 133 (ACT49).

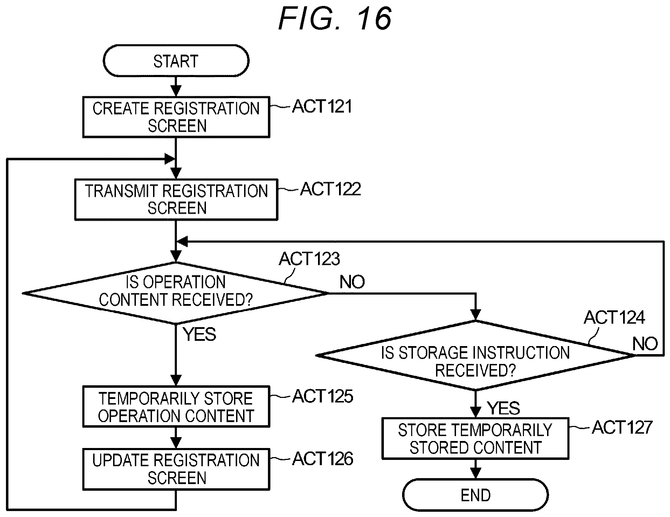

Hereinafter, operations of the server device 1 for implementing such an operation at the time of creating a workflow will be described. FIG. 16 is a flowchart showing an example of a workflow creation processing operation executed by the processor 11 of the server device 1. In response to receiving a workflow creation request from the creator terminal 2A, the processor 11 can implement this workflow creation processing operation by executing a workflow creation program, which is an information processing program according to the second embodiment, as a control program stored in the workflow creation program storage unit 138 of the auxiliary storage device 13.

In ACT121, the processor 11 creates a responsible person list on the basis of the information on the workflow responsible person stored in the responsible person database 131, and creates screen data of the workflow registration screen to which the responsible person list is applied.

In ACT122, the processor 11 transmits the created screen data of the workflow registration screen to the creator terminal 2A via the network NW by the communication interface 14.

In ACT123, the processor 11 determines whether the operation content indicating the content of the operation of defining a workflow and/or setting a workflow responsible person in the creator terminal 2A which is transmitted from the creator terminal 2A via the network NW is received by the communication interface 14. When the operation content is received, the processor 11 determines YES in ACT123 and proceeds to the process of ACT125. When the operation content is not received, the processor 11 determines NO in ACT123 and proceeds to the process of ACT124.

In ACT124, the processor 11 determines whether a storage instruction transmitted from the creator terminal 2A via the network NW is received by the communication interface 14. When a storage instruction is received, the processor 11 determines YES in ACT124 and proceeds to the process of ACT127. When a storage instruction has not been received, the processor 11 determines NO in ACT 124 and returns to the process of ACT123. In this manner, the processor 11 waits to receive operation content or a storage instruction from the creator terminal 2A by repeating the processes of ACT123 and ACT124.

In ACT125, the processor 11 temporarily stores the definition of a workflow and/or the setting of a workflow responsible person, which are the operation content received from the creator terminal 2A, in the main memory 12.

In ACT 126, the processor 11 updates the screen data of the workflow registration screen in accordance with the definition of a workflow and/or the setting of a workflow responsible person. Thereafter, the processor 11 proceeds to the process of ACT122, and transmits the updated screen data of the workflow registration screen to the creator terminal 2A.

In ACT127, the processor 11 stores the temporarily stored content of the main memory 12 in the auxiliary storage device 13. That is, the processor 11 stores the created workflow, which is indicated by the workflow definition content, in the workflow storage unit 132. The processor 11 also stores correspondence information indicating a correspondence between a workflow and a notification destination user based on the setting of a workflow responsible person in the responsible person setting storage unit 133. Then, the processor 21 ends the workflow creation processing operation shown in this flowchart. At this time, it is desirable to delete the data temporarily stored in the main memory 12.

Operations during execution of a workflow in the information processing system according to the second embodiment are the same as in the first embodiment, and thus the description thereof will be omitted.

As described above, an information processing system according to the second embodiment includes the responsible person database 131 of the server device 1 that stores user information including notification destination information for each notification destination user ( notification destination). The processor 11 of the server device 1 is an example of a creation unit that creates a workflow by setting a notification destination user stored in the responsible person database 131 as a notification destination to be used when a notification to a user is required in a workflow for which user information is not assigned at the starting of the workflow. The workflow storage unit 132 of the server device 1 stores the workflow created by the processor 11. The processor 11 is an example of an execution unit that, when a workflow stored in the workflow storage unit 132 is started and a notification to a user is required, acquires user information about the notification destination user set at the time workflow was created from the responsible person database 131 and notifies the notification destination user in accordance with notification destination information included in the acquired user information.

Furthermore, the server device 1 includes a communication interface 14 that receives the operation content of the creator of the workflow at a registered user terminal 2 ( creator terminal 2A) via the network NW. In this manner, the communication interface 14 is an example of an operation unit that accepts the operation of the creator of the workflow. Furthermore, the server device 1 includes the processor 11. The processor 11 sets a notification destination user to be used as a notification destination when a notification to a user is required in the workflow. The notification destination user is set from among notification destination users stored in advance, in accordance with the creator's operation accepted by the communication interface 14, and creates a workflow for which user information is not assigned at the starting of the workflow. Then, the processor 11 stores the created workflow and the set notification destination information in the workflow storage unit 132 and the responsible person setting storage unit 133 of the auxiliary storage device 13 of the server device 1. In this manner, the processor 21 is an example of a creation unit and a storage control unit.

Thus, the information processing system and information processing device according to the second embodiment can also achieve the same effects as those of the information processing system and information processing device according to the first embodiment.

### [Other embodiments]

Although certain example embodiments of the information processing system and the information processing device are described above, the present disclosure is not limited thereto.

For example, in the first and second embodiments, the responsible person database 131 stores user information including notification destination information for a user group (a plurality of registered users) associated with a single responsible person ID assigned as one notification destination user. However, the responsible person database 131 may store user information including notification destination information for only a single registered user in association with just one responsible person ID. In this case, a plurality of notification destination users can be set when creating a workflow, and the responsible person setting storage unit 133 may store a plurality of responsible person IDs set in association with a workflow ID of one created workflow.

In addition, the notification destination information stored in the responsible person database 131 is not limited to an email address, but may be any information indicating a destination via which some service or operation capable of giving a notification to a service user is provided. As such, notification may permit the transmitting of a file in some manner. For example, the notification destination information may be a user name of a messaging app.

In the first and second embodiments, description is given of an example of a workflow in which a newly stored file is acquired from the storage service SS, this file is subjected to character recognition by the OCR service OS, and the OCR result is then checked by a preset responsible person before being stored in the storage service SS. However, the workflow to be created and executed is not limited thereto.

In addition, the flow of the information processing performed by the processor 11 or the processor 21 as described with reference to the provided flowcharts is only an example. The information processing flow is not limited to the ordering of these examples. In general, as long as there is no discrepancy or conflict with a preceding or subsequent process, the order of processes may be changed or processes may be performed in parallel as appropriate.

In an embodiment, a workflow creation program, which is a control program, is stored in advance in the auxiliary storage device 13 of the server device 1 or in the registered user terminal 2, which can be a creator terminal 2A. However, the workflow creation program may be transferred separately from the server device 1 or the registered user terminal 2 by being written to a writable storage device provided in the server device 1 in response to an operation by an administrator or the like. The transfer of these workflow creation programs and the like can be performed by storing them in a removable computer-readable storage medium or by communication via a network. The format of the computer-readable storage medium does not matter as long as it can store a program and is readable by the device, such as a CD-ROM or a memory card.

While certain embodiments have been described, these embodiments have been presented by way of example only, and are not intended to limit the scope of the disclosure. Indeed, the novel embodiments described herein may be embodied in a variety of other forms; furthermore, various omissions, substitutions and changes in the form of the embodiments described herein may be made without departing from the framework of the disclosure. The accompanying claims and their equivalents are intended to cover such forms or modifications as would fall within the scope of the disclosure.

## Claims

1. An information processing system, comprising:
a first storage unit (131) that stores user information for each notification destination user;
a creation unit (21) that creates a workflow plan including a notification destination user in the first storage unit set as a notification destination to be used for notifications required in the workflow plan, the workflow plan being executable without requiring a user to provide user information;
a second storage (132) unit that stores the workflow plan created by the creation unit; and
an execution unit (11) that, when execution of the workflow plan stored in the second storage unit is started, acquires user information of the notification destination user set in the workflow plan as the notification destination from the first storage unit and sends a notification to the notification destination user in accordance with the acquired user information and the workflow plan.

2. The information processing system according to claim 1, further comprising:
a third storage unit that stores correspondence information indicating a correspondence between the workflow plan and the notification destination user, wherein
the creation unit creates the correspondence information when creating the workflow plan and stores the correspondence information in the third storage unit, and
the execution unit determines the notification destination user corresponding to the workflow plan based on the correspondence information stored in the third storage unit, and acquires the user information of the determined notification destination user from the first storage unit.

3. The information processing system according to claim 1 or 2, wherein the notification destination user is a user group including a plurality of different users.

4. The information processing system according to any one of claims 1 to 3, wherein the notification destination user is a single user.

5. The information processing system according to any one of claims 1 to 4, further comprising:
a plurality of registered user terminals; and
a server device connected to the registered user terminals via a network.

6. The information processing system according to claim 5, wherein the creation unit is one of the plurality of registered user terminal executing a workflow creation program.

7. The information processing system according to claim 5, wherein the creation unit is one of the plurality of registered user terminal operating in conjunction with a workflow creation program executing on the server device.

8. The information processing system according to any one of claims 5 to 7, wherein the first storage unit is a database stored on the server device.

9. The information processing system according to claim 8, wherein the second storage unit is stored on the server device.

10. The information processing system according to any one of claims 1 to 9, wherein the workflow plan includes:
identifying whether a new file has been added to a first cloud storage folder,
performing optical character recognition (OCR) on the new file,
sending a result of the OCR on the new file to the notification destination user for confirmation of the result, and
storing the new file and the confirmed result of the OCR to a second cloud storage folder.

11. A workflow system, comprising:
a server device connectable to a plurality of registered user terminals via a network, wherein
the server device includes an information processing device system according to any one of claims 1 to 10 wherein
the creation unit creates a workflow plan in conjunction with at least one registered user terminal in the plurality of user terminals.

12. A non-transitory, computer-readable medium storing program instructions which, when executed by a processor of an information processing system, causes the system to perform a method comprising:
creating a workflow plan including a notification destination user in a first storage unit that has been set as a notification destination to be used for notifications required in the workflow plan, the workflow plan being executable without requiring a user of the system to provide user information, the first storage unit storing user information for each notification destination user in the system;
storing the workflow plan in a second storage unit;
executing the workflow plan stored in the second storage unit; and
acquiring user information of the notification destination user set in the workflow plan as the notification destination from the first storage unit and sending a notification to the notification destination user in accordance with the acquired user information and the workflow plan.

13. The non-transitory, computer-readable medium according to claim 12, the method further comprising:
creating correspondence information indicating a correspondence between the workflow plan and the notification destination user when creating the workflow plan;
storing the correspondence information in a third storage unit; and
determining the notification destination user corresponding to the workflow plan based on the correspondence information stored in the third storage unit.

14. The non-transitory, computer-readable medium according to claim 13, wherein the notification destination user is a user group including a plurality of different users.

15. The non-transitory, computer-readable medium according to any one of claims 12 to 14, wherein the notification destination user is a single user.
